Europäisches Patentamt

(19) European Patent Office

Office européen des brevets

(11) Numéro de publication: **0 099 287**
**B1**

(12) **FASCICULE DE BREVET EUROPEEN**

(45) Date de publication du fascicule du brevet:
**13.05.87**

(21) Numéro de dépôt: **83401377.3**

(22) Date de dépôt: **05.07.83**

(51) Int. Cl.⁴: **A 23 B 7/03,** A 23 L 1/216

(54) Procédé de préparation de pommes de terre à des fins de conservation et utilisation des dites pommes de terre pour l'obtention de frites.

(30) Priorité: **09.07.82 FR 8212413**

(43) Date de publication de la demande:
**25.01.84 Bulletin 84/4**

(45) Mention de la délivrance du brevet:
**13.05.87 Bulletin 87/20**

(84) Etats contractants désignés:
**BE CH DE GB LI LU NL**

(56) Documents cités:
**DE - C - 27 075**
**DE - C - 83 562**
**FR - A - 1 518 529**
**US - A - 2 681 285**
**US - A - 3 635 729**

(73) Titulaire: **UNION TECHNIQUE AQUITAINE, SARL, Zone Industrielle, F-47300 Villeneuve-sur-Lot (FR)**

(72) Inventeur: **Escande, Henri, "Favols" Bias, F-47300 Villeneuve-sur-Lot (FR)**

(74) Mandataire: **Morelle, Guy Georges Alain, Cabinet SCOPI 1, Avenue de Rangueil, F-31400 Toulouse (FR)**

# Description

L'invention a trait aux techniques utilisées pour maintenir comestibles le plus longtemps possible les aliments, sans altérer leurs qualités nutritives et gustatives.

Les techniques actuelles de conservation permettent d'éviter aux aliments les altérations qu'ils pourraient subir dans le temps telles que: la dégradation des constituants tissulaires, la modification de la composition chimique, l'apparition de substances toxiques à l'homme, etc....

L'invention concerne plus particulièrement les techniques de conservation de la pomme de terre dite «précuite», c'est-à-dire préparée préalablement pour une cuisson rapide au moment de sa consommation. Cette préparation consiste généralement à laver la pomme de terre crue dans l'eau, à l'éplucher, éventuellement à la découper en morceaux, et à la soumettre à une cuisson partielle.

Une technique très connue de conservation de pommes de terre précuites, dite de congélation, consiste à abaisser la température des pommes de terre (entre − 40 et − 50 °C) de manière à obtenir une cristallisation des liquides intercellulaires et extracellulaires de celles-ci. Lorsque ces pommes de terre sont ensuite amenées à la température ambiante, ces liquides fondent régulièrement, sans altération notable de leurs qualités nutritives. Le développement de ces techniques de congélation a permis la mise en œuvre de chaînes frigorifiques à l'aide de bateaux, wagons, camions et entrepôts, aménagés à cet effet entre le lieu de production et le lieu de consommation. Bien que la réfrigération soit à l'origine d'un mode d'alimentation moderne qui prend de plus en plus d'extension, la congélation des pommes de terre impose la présence d'un appareil frigorifique, généralement onéreux, aux lieux de consommation et peut, en outre, causer des conséquences dommageables lorsqu'une décongélation accidentelle (défaillance ou défectuosité d'un appareil de la chaîne frigorifique) se produit avant l'étape finale de consommation.

De nombreuses recherches ont été menées pour éviter les inconvénients précités de congélation dans les techniques de conservation des pommes de terre.

Ainsi, la société DAI NIPPON INSATSU KK a décrit dans sa demande de brevet français n° 2 458 228 un procédé de préparation de pommes de terre frites précuites, destinées à être conservées à température ambiante. Dans ce procédé, les pommes de terre crues, après avoir été lavées, épluchées et découpées, sont soumises à un séchage préalable partiel, puis placées dans un emballage constitué d'une matière en feuille étanche au gaz et opaque à la lumière, et enfin stérilisées par chauffage des morceaux de pommes de terre emballés. Ce procédé est intéressant car il permet de conserver les pommes de terre à température ambiante, et par voie de conséquence, il évite la mise en place coûteuse d'une chaîne frigorifique.

Toutefois, ce procédé présente quelques inconvénients car la pomme de terre qui est soumise à une cuisson partielle après la phase de séchage et qui conserve une teneur en humidité relativement importante (de l'ordre de 70%), a tendance à exsuder pendant la phase de stérilisation. L'emballage étant hermétique, cet exsudat pénètre à nouveau dans la pomme de terre précuite et dégrade dans le temps la texture de cette dernière.

De plus, le terme séchage dans l'étape de «séchage préalable partiel» est impropre car le susdit séchage consiste à faire frire les morceaux de pommes de terre dans de l'huile chaude. Il en résulte que la perte d'eau effectivement réalisée est en grande partie compensée par une absorption des matières grasses de l'huile, absorption qui favorise la dégradation de la texture de la pomme de terre.

Faisant le bilan de cet état de fait la demanderesse a imaginé un nouveau procédé de préparation de pommes de terre à des fins de conservation.

Ce procédé qui consiste dans les opérations suivantes: lavage, épluchage, éventuellement découpage des pommes de terre, blanchiment, déshydratation à l'air chaud dans une étuve et enfin stockage dans un emballage hermétique, est caractérisé par le fait que l'opération de blanchiment consiste à plonger les pommes de terre lavées dans un bain d'eau pure en ébullition pendant une durée de 1 à 5 minutes, selon la grosseur des morceaux de pommes de terre, et à soumettre immédiatement lesdits morceaux à l'opération de déshydratation afin de ramener leur taux d'humidité à 8%.

Ce procédé est différent par rapport au dernier évoqué ci-dessus en ce que le séchage des pommes de terre, ou des morceaux de pommes de terre, s'opère après l'étape de précuisson appelée ici blanchiment et avant l'étape d'emballage.

Selon le procédé décrit dans FR-A-1 518 529, la déshydratation des pommes de terre est précédée par une opération de séchage et de refroidissement du produit après que celui-ci soit extrait du bain de blanchiment, et le blanchiment est effectué avec précuisson préalable à une température inférieure à celle de l'eau portée à ébullition.

Ce procédé permet notamment d'éviter l'utilisation de conservateurs chimiques et plus particulièrement de sel dans l'eau de blanchiment ainsi que cela est proposé dans certains procédés comme ceux décrits dans le DE-C-83 562 ou dans US-A-3 653 729. De plus, il améliore les qualités gustatives de la pomme de terre car le blanchiment permet d'évacuer partiellement quelques substances en excès dans le tubercule, et plus particulièrement celles amidonnées, qui font généralement de la pomme de terre un aliment féculent.

Par ailleurs, on comprend que la faible teneur en humidité, obtenue à l'issue de l'opération de déshydratation, permet d'augmenter notablement les temps de conservation des pommes de terre ainsi traitées. En effet, l'eau est le premier agent oxydant qui intervient lors de la dégradation chimique d'un produit, et, dans le cas présent, de la pomme de terre.

Il convient enfin de préciser que l'emballage hermétique de stockage des pommes de terre est formé d'un sac en plastique. Il n'est pas indispensable, dans le procédé de l'invention, d'utiliser des emballages résistants car ceux-ci, qui ne sont soumis à aucune contrainte (vide et stérilisation), n'ont pour objet que d'assurer un rôle protecteur contre les agents environnants (air, poussière, oxygène, eaux, etc...) qui règnent dans le volume de stockage.

Le procédé de préparation de pommes de terre qui vient d'être décrit, permet de conserver les pommes de terre pendant plusieurs années et à température ambiante ainsi que de maintenir les qualités gustatives et nutritives de celles-ci lorsqu'elles sont consommées par la suite.

A cette fin, l'invention a également pour objet un procédé d'utilisation des pommes de terre préparées selon le procédé ci-dessus, qui consiste à plonger les pommes de terre déballées de leur sac en plastique, dans un bain d'eau en ébullition pendant une durée approximative de 15 à 20 minutes. Ce bain d'eau chaude procure aux pommes de terre d'une part l'eau nécessaire pour qu'elles retrouvent leurs propriétés physiques et chimiques d'origine et d'autre part, la chaleur nécessaire pour parfaire leur cuisson.

Une fois sorties du bain d'eau chaude, ces pommes de terre sont ensuite égouttées et peuvent:

– soit, notamment lorsqu'elles sont entières, être employées directement pour accompagner le mets principal d'un plat,

– soit, notamment lorsqu'elles sont découpées à des dimensions prédéterminées, être plongées dans un bain d'huile bouillante pendant une durée de 2 à 6 minutes pour être frites.

Les caractéristiques et d'autres avantages de la présente invention apparaîtront plus clairement à la lecture de la description ci-après donnant, à titre d'exemple, un mode de préparation et d'utilisation de pommes de terre frites.

Dans un premier temps, les pommes de terre sont lavées, épluchées, découpées en des morceaux adoptant la forme que l'on désire donner aux «frites» (le terme frite signifie dans le contexte de l'invention le produit final obtenu).

Dans un deuxième temps, les morceaux de pommes de terre sont plongés dans un bain d'eau pure bouillante pendant une durée de 3 à 4 minutes.

Dans un troisième temps, les morceaux blanchis précédemment sont égouttés et soumis à un passage d'air chaud à l'intérieur d'une étuve afin de ramener leur taux d'humidité à 8%.

Dans un quatrième temps marquant la fin de l'étape de préparation des morceaux de pommes de terre pour leur conservation, ceux-ci sont, une fois déshydratés, enfermés dans un sac hermétique en plastique.

Dans un cinquième temps marquant le début de l'étape d'utilisation des morceaux de pommes de terre conservés selon le procédé de préparation de l'étape précédente, lesdits morceaux sont déballés de leur sac en plastique et plongés dans un bain d'eau bouillante pendant une durée de 15 à 20 minutes.

Dans un sixième et dernier temps, les morceaux sont égouttés et plongés dans un bain d'huile bouillante ou toute autre matière grasse comestible pendant une durée de 1 à 3 minutes pour donner auxdits morceaux l'aspect et le goût des frites. La durée de cette dernière opération est variable selon le goût et l'aspect désirés des frites. Par exemple, la durée sera plus longue pour l'obtention de frites roussies et croustillantes que celle pour l'obtention de frites moins roussies et plus souples.

## Revendications

1. Procédé de préparation de pommes de terre à des fins de conservation, dans lequel les pommes de terre sont successivement: lavées, épluchées, éventuellement découpées, blanchies, déshydratées en les soumettant à un passage d'air chaud à l'intérieur d'une étuve, et enfin stockées dans un emballage hermétique, caractérisé en ce que l'opération de blanchiment, qui consiste à plonger les pommes de terre lavées dans un bain d'eau pure en ébullition pendant une durée de 1 à 5 minutes selon la grosseur des morceaux de pommes de terre, est immédiatement suivie de l'opération de déshydratation afin de ramener le taux d'humidité desdits morceaux à 8%.

2. Procédé d'utilisation des pommes de terre préparées selon le procédé de la revendication 1, et dans lequel lesdites pommes de terre séchées sont déballées et plongées dans un bain d'eau, caractérisé en ce que lesdites pommes de terre déballées sont plongées dans un bain d'eau en ébullition pendant une durée de quinze minutes à vingt minutes.

3. Procédé d'utilisation selon la revendication 2, et dans lequel les pommes de terre sont égouttées à leur sortie de leur bain d'eau et sont ensuite plongées dans un bain d'huile bouillante, caractérisé en ce que les pommes de terre sont plongées pendant une durée de 2 à 6 minutes dans le bain d'huile bouillante.

## Claims

1. Process for preparing potatoes for their preservation, wherein said potatoes are successively washed, peeled, eventually cut into pieces, scalded, dehydrated by subjecting them to a hot-air stream inside a drying apparatus and stocked in a sealed wrapping, characterized in that scalding, consisting of plunging the washed potatoes in pure boiling water for 1–5 minutes according to the size of the pieces of potatoes, is immediately followed by the dehydrating operation so as to lower the degree of moisture of said pieces down to 8%.

2. Process for utilizing potatoes prepared according to the process as set forth in claim 1, wherein said dehydrated potatoes are unpacked and plunged in a bath of water, characterized in that said unpacked potatoes are plunged in a bath of boiling water for fifteen to twenty minutes.

3. Process for utilizing potatoes as set forth in claim 2, wherein said potatoes are drained after they have been plunged into water and wherein said potatoes are plunged in boiling oil, characterized in that said potatoes are plunged in boiling oil for 2–6 minutes.

**Patentansprüche**

1. Verfahren zum Zubereiten von Kartoffeln zu Konservierungszwecken, wobei die Kartoffeln nacheinander gewaschen, geschält, evtl. zerschnitten, blanchiert, mittels Durchgang von Heissluft in einem Heizschrank entwässert und schliesslich in einer hermetisch geschlossenen Verpackung gelagert werden, dadurch gekennzeichnet, dass der Arbeitsvorgang des Blanchierens, welches darin besteht, dass die gewaschenen Kartoffeln 1 bis 5 Minuten lang (je nach Grösse der Kartoffelstücke) in ein Bad reinen, kochenden Wassers getaucht werden, unmittelbar nach der Entwässerung erfolgt, um den Feuchtigkeitsgehalt dieser Stücke auf 8% zu senken.

2. Verfahren zur Verwendung von Kartoffeln, die nach dem Verfharen des Anspruchs 1 zubereitet sind, wobei diese getrockneten Kartoffeln ausgepackt und in eine Wasserbad getaucht werden, dadurch gekennzeichnet, dass diese ausgepackten Kartoffeln 15 bis 20 Minuten lang in ein kochendes Wasserbad getaucht werden.

3. Verfahren zur Verwendung gemäss Anspruch 2, wobei die dem Wasserbad entnommenen Kartoffeln abgetropft und dann in ein Bad kochenden Öles getaucht werden, dadurch gekennzeichnet, dass die Kartoffeln 2 bis 6 Minuten lang in das kochende Ölbad getaucht werden.